# EUROPEAN PATENT SPECIFICATION

(11) **EP 3 868 899 B1**
(45) Date of publication and mention of the grant of the patent: **12.06.2024**
(21) Application number: 19874065.6
(22) Date of filing: 15.10.2019
(51) Int. Cl.: C21B 13/00, C21B 13/14

(54) **CARBON DIOXIDE EMISSION REDUCTION TYPE MOLTEN IRON MANUFACTURING APPARATUS AND MANUFACTURING METHOD THEREOF**
VORRICHTUNG ZUR HERSTELLUNG VON EISENSCHMELZE VOM KOHLENDIOXIDEMISSIONSREDUKTIONSTYP UND VERFAHREN ZU IHRER HERSTELLUNG DAVON
APPAREIL DE FABRICATION DE FER FONDU AVEC ÉMISSIONS RÉDUITES DE DIOXYDE DE CARBONE ET PROCÉDÉ DE FABRICATION ASSOCIÉ

(30) Priority: 17.10.2018 KR 20180123937
(43) Date of publication of application: 25.08.2021
(73) Proprietor: POSCO Co., Ltd, Pohang-si, Gyeongsangbuk-do 37859 (KR)
(72) Inventor: SHIN, Myoung Kyun, Pohang-si Gyeongsangbuk-do 37859 (KR); KO, Chang Kuk, Pohang-si Gyeongsangbuk-do 37859 (KR); YOON, Shikyung, Pohang-si Gyeongsangbuk-do 37859 (KR)
(74) Representative: Meissner Bolte Partnerschaft mbB
(86) International application number: PCT/KR2019/013538
(87) International publication number: WO 2020/080808

(56) References cited:
- WO-A1-2006/011774
- WO-A1-2008/078891
- WO-A1-2012/059255
- JP-A- 2014 015 655
- JP-A- 2018 024 896
- KR-A- 20080 014 438
- KR-A- 20120 035 348
- KR-A- 20130 066 263
- KR-B1- 101 321 928
- US-A1- 2016 168 652

## Description

### [Technical Field]

The present invention relates to a molten iron manufacturing device and a manufacturing method thereof. More specifically, it relates to a molten iron manufacturing device and a manufacturing method thereof that may reduce an amount of a coke used to reduce an amount of carbon dioxide by manufacturing a molten iron using a reduction compacted material including iron carbide while using a modified reduction gas to reduce a powdered ore.

### [Background Art]

Currently, about 60 % of production of iron in the whole world is produced by a blast furnace process that has been developed since the 14th century. The blast furnace process is a method of manufacturing molten iron by putting coke, which is manufactured using sintered iron ore and free-burning coal as raw materials, into a blast furnace, blowing hot air into the blast furnace, and reducing iron ore to iron.

As such, since the blast furnace process, which is a major type of molten iron production facility, requires a raw material that has a certain level of strength and has a particle size that can ensure ventilation in the furnace due to its reaction characteristic, a carbon source used as a fuel and reduction agent depends mainly on a coke processed from a specific raw material coal, and an iron source mainly depends on a sintered ore that has undergone a series of agglomeration processes.

Accordingly, in the current blast furnace process, since raw material pretreatment facilities such as coke manufacturing facilities and sintering facilities are necessarily involved, in addition to the need to construct ancillary facilities other than the blast furnace, investment costs are consumed in a large amount due to the need to install environmental pollution prevention facilities for all environmental pollutant materials generated from the auxiliary facilities, thereby there is a problem in which manufacturing costs increase rapidly.

In order to reduce the amount of the coke used in the blast furnace as a solution to this problem of the blast furnace process, techniques have been proposed to replace and reduce some of the coke used in the blast furnace by directly blowing steel making process by-product gas, hydrogen-containing resources, and biomass into a tuyere or after reforming.

In addition, a technique, in which by-product gas, hydrogen-containing resources, and biomass in the iron making process are reformed to be converted into a reduction gas, and then the reduction gas is used to reduce the iron ore and to produce a pre-reduction ore, which is then replaced in a blast furnace to be charged in the blast furnace, have been proposed to reduce part of the coke and sintered ore required for ore reduction.

However, in the former case, in the gas blowing through the tuyere, the blowing amount is limited due to combustion temperature excessive deterioration around the tuyere and insufficient heat in the blast furnace. In the latter case, the method of manufacturing the reduction iron and charging it to the blast furnace requires a separate gas reforming furnace, so there is a problem in commercialization in terms of securing economic efficiency.

Patent document KR 101 321 928 B1 relates to a molten iron manufacturing apparatus and a method for manufacturing molten iron using the same.

Patent document WO 2008/078891 A1 relates to an apparatus and method for manufacturing molten iron while reusing an offgas of the packed bed reduction reactor and improving energy efficiency.

Patent document WO 2012/059255 A1 relates to a method for the removal of CO₂ from exhaust gases from plants for pig iron production or synthesis gas plants.

Patent document WO 2006/011774 A1 relates to a device for manufacturing iron wire and a method for manufacturing iron wire using the gas generated by modifying the by-product gas generated in a steel making process, and to a method for manufacturing a molten iron using the same.

### [Disclosure]

### [Technical Problem]

The present disclosure provides a carbon dioxide discharge reduction type of molten iron manufacturing device and a manufacturing method thereof that may reduce an amount of a coke used to reduce an amount of carbon dioxide by manufacturing a molten iron using a reduction compacted material including iron carbide while using a modified reduction gas to reduce a powdered ore.

### [Technical Solution]

A manufacturing device of molten iron according to an embodiment of the present invention includes: a reduction unit for reducing a powdered ore by using a reduction gas; a compacted material supply unit for manufacturing a first reduction compacted material including at least one of iron and oxidized steel by using the reduced powdered ore; a gas supply unit for supplying a byproduct gas generated from a coke manufacturing facility; and a reaction unit for, wherein the reaction unit includes a reaction furnace in which a reaction of the first reduction compacted material and the byproduct gas is performed, a first reduction gas conduit for supplying the reduction gas produced from the reaction furnace to the reduction unit; and a first supply line for supplying the second reduction compacted material produced from the reaction furnace, wherein the gas supply unit includes: a supply conduit for supplying a byproduct gas generated from the coke manufacturing facility; a heater connected to the supply conduit to heat the byproduct gas; a high temperature gas conduit for connecting the heater and the reaction furnace to supply the heated byproduct gas; a sulfureted hydrogen insufflator for injecting sulfureted hydrogen into the high temperature gas conduit; and a second oxygen blower for injecting oxygen into the high temperature gas conduit.

A reduction melting furnace; a coke charging unit for charging a coke produced from the coke manufacturing facility to the reduction melting furnace; and a compacted material charging unit for charging the second reduction compacted material to the reduction melting furnace may be further included.

The reduction unit may include: a combustor for partially combusting the reduction gas supplied from the reaction furnace; a second reduction gas conduit for supplying the partially combusted reduction gas; a first oxygen blower for blowing oxygen into the combustor; and a fluidized bed reduction furnace in which the powdered ore is reduced by the partially combusted reduction gas and oxygen.

The compacted material supply unit may include: a powdered ore storage bin in which the reduced powdered ore is stored; a compressor for producing the first reduction compacted material by hot pressing the reduced powdered ore supplied from the powdered ore storage bin; a disintegrator for crushing the hot pressed first reduction compacted material; and a transfer line for supplying the crushed first reduction compacted material to the reaction furnace.

The reduction unit may include: a heat exchanger through which high temperature discharge gas generated from the fluidized bed reduction furnace passes; a vibration damper for wet-vibrating the discharge gas that has passed through the heat exchanger; a discharge conduit for discharging the wet-vibrated discharge gas; a first circulation conduit branched from the discharge conduit and connected to the heat exchanger to supply heat to some of the wet-vibrated discharge gas; and a second circulation conduit for connecting the heat exchanger and the combustor to supply the heated discharge gas.

The coke charging unit may include: a coke storage bin in which a coke manufactured from the coke manufacturing facility is stored; and a raw material transfer line for transferring the coke supplied from the coke storage bin to the reduction melting furnace.

The compacted material charging unit may include: a cooler for cooling the second reduction compacted material supplied from the reaction furnace; a second supply line where the supply of the cooled second reduction compacted material is performed; a compacted material storage bin in which the cooled second reduction compacted material is stored; an ejector for ejecting the second reduction compacted material supplied from the compacted material storage bin; and a third supply line for supplying the second reduction compacted material to the raw material transfer line.

The first reduction compacted material may be supplied from the upper part of the reaction furnace and the byproduct gas may be supplied from the lower part of the reaction furnace.

A manufacturing method of molten iron according to an embodiment of the present invention includes: reducing a powdered ore by using a reduction gas; preparing a first reduction compacted material including at least one of iron and oxidized steel by using the reduced powdered ore; providing a byproduct gas generated from a coke manufacturing facility; and reacting the first reduction compacted material and the byproduct gas to produce a second reduction compacted material including an iron carbide and a reduction gas reformed with the byproduct gas, and in the reducing of the powdered ore, the powdered ore is reduced by using the reduction gas reformed with the byproduct gas, wherein the preparing the byproduct gas includes: heating the byproduct gas generated from the coke manufacturing facility and including hydrogen and a hydrocarbon; and blowing the heated byproduct gas together with sulfureted hydrogen and oxygen, wherinin the blowing of the byproduct gas together with the sulfureted hydrogen and oxygen, oxygen may be 13 to 18 volume% of the entire 100 volume% of the blown byproduct gas, sulfureted hydrogen, and oxygen.

After producing the second reduction compacted material and the reduction gas, charging a coke produced from the coke manufacturing facility to a reduction melting furnace; and charging the second reduction compacted material to the reduction melting furnace, may be further included.

In the producing of the second reduction compacted material and the reduction gas, a reaction temperature of the byproduct gas and the first reduction compacted material may be 700 to 750 °C, and a partial pressure ratio (P_{H2S}/P_{H2}) of the sulfureted hydrogen to the hydrogen may be 0.0003 to 0.0005.

In the producing of the second reduction compacted material and the reduction gas, the reaction of the byproduct gas with the first reduction compacted material may include at least one among Reaction Equations 1 to 3 below.

[Reaction Equation 1] CH₄ + H₂O -> CO + 4H₂

[Reaction Equation 2] Fe + CH₄ -> Fe₃C + H₂

[Reaction Equation 3] FeO + CH₄ -> Fe₃C + H₂O

### [Description of the Drawings]

FIG. 1 is a schematic view of a carbon dioxide discharge reduction type of molten iron manufacturing device according to an embodiment of the present invention.
FIG. 2 is a view showing a result of simulating a heat and material balance in a reaction furnace in a carbon dioxide discharge reduction type of molten iron manufacturing device according to an embodiment of the present invention.
FIG. 3 is a view schematically showing an effect of reducing a coke according to an embodiment of the present invention.

### [Mode for Invention]

It will be understood that, although the terms first, second, third, etc., may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section described below could be termed a second element, component, region, layer, or section without departing from the teachings of the present invention.

The terminology used herein is for the purpose of describing particular embodiments only and is not intended to be limiting of the invention. As used herein, the singular forms "a", "an", and "the" are intended to include the plural forms as well, unless the context clearly indicates otherwise. It will be further understood that the terms "comprises" and "comprising", when used in this specification, specify the presence of stated features, integers, steps, operations, elements, and/or components, but do not preclude the presence or addition of one or more other features, integers, steps, operations, elements, components, and/or groups.

It will be understood that when an element such as a layer, film, region, or substrate is referred to as being "on" or "above" another element, it can be directly on or above the other element or intervening elements may also be present. In contrast, when an element is referred to as being "directly on" another element, there are no intervening elements therebetween.

If not defined differently, all the terminologies including the technical terminologies and scientific terminologies used herein have meanings that are the same as ones that those skilled in the art generally understand.

The terms defined in dictionaries should be construed as having meanings corresponding to the related prior art documents and those stated herein, and are not to be construed as being ideal or official, if not so defined.

Hereinafter, exemplary embodiments of the present invention will be described in detail so as to be easily practiced by a person skilled in the art to which the present invention pertains. As those skilled in the art would realize, the described embodiments may be modified in various different ways, all without departing from the spirit or scope of the present invention.

### Carbon dioxide discharge reduction type of molten iron manufacturing device

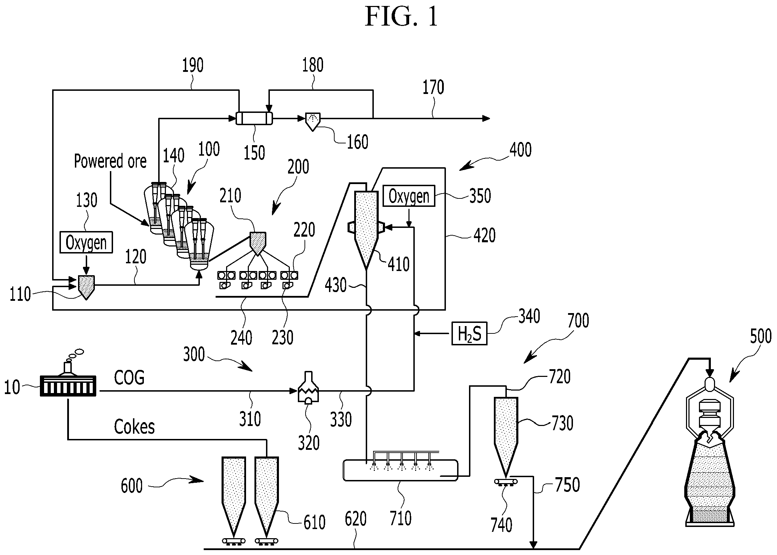

A carbon dioxide discharge reduction type of molten iron manufacturing device according to an embodiment of the present invention, as shown in FIG. 1, includes a reduction unit 100 for reducing a powdered ore by using a reduction gas, a compacted material supply unit 200 for manufacturing a first reduction compacted material including one or more kinds among irons and oxidized steels by using the reduced powdered ore, a gas supply unit 300 for supplying a byproduct gas generated from a coke manufacturing facility 10, and a reaction unit 400 for reacting the first reduction compacted material and a byproduct gas to manufacture a second reduction compacted material including an iron carbide and a reduction gas of which the byproduct gas is reformed and supplying the reduction gas to the reduction unit 100.

The reaction unit 400 may include a reaction furnace 410 in which a reaction of the byproduct gas and the first reduction compacted material is executed. It may include a first reduction gas conduit 420 for supplying the reduction gas manufactured from the reaction furnace 410 and a first supply line 430 for supplying a second reduction compacted material manufactured from the reaction furnace 410.

Meanwhile, the carbon dioxide discharge reduction type of molten iron manufacturing device according to an embodiment of the present invention may further include a reduction melting furnace 500, a coke charging unit 600 for charging the coke manufactured from the coke manufacturing facility 10 to the reduction melting furnace 500, and a compacted material charging unit 700 for charging the second reduction compacted material to the reduction melting furnace 500.

The reduction unit 100 reduces the powdered ore by using the reduction gas including carbon monoxide (CO). The powdered ore may include iron ore.

Specifically, the reduction unit 100 may include a combustor 110 that partially combusts the reduction gas supplied from the reaction furnace 410, a second reduction gas conduit 120 that supplies the partially combusted reduction gas, a first oxygen blower 130 for blowing oxygen into the combustor 110, and a fluidized bed reduction furnace 140 where the reduction of the powdered ore is achieved by the partial combusted reduction gas and oxygen.

The combustor 110 is connected to the first reduction gas conduit 420, which supplies the reduction gas produced from the reaction furnace 410, and may partially combust the supplied reduction gas. The second reduction gas conduit 120 is connected to the combustor 110 so that the partially combusted reduction gas may be moved.

The first oxygen blower 130 is connected to the combustor 110 so that oxygen may be injected into the combustor 110. The second reduction gas conduit 120 is connected to the fluidized bed reduction furnace 140 so that the partially combusted reduction gas and oxygen may be supplied to the fluidized bed reduction furnace 140. The reduction gas may be heated through combustion heat by combusting some of carbon monoxide and hydrogen included in the reduction gas.

In the fluidized bed reduction furnace 140, the powdered ores may be reduced by the reaction with the partially combusted reduction gas and oxygen. The fluidized bed reduction furnace 140 may be configured in multiple stages of from 3 to 4 stages.

In detail, the reduction unit 100 may further include a heat exchanger 150 through which a discharge gas of a high temperature generated from the fluidized bed reduction furnace 140 passes, a vibration damper 160, which wet-vibrates the discharge gas that has passed through the heat exchanger 150, and a discharge conduit 170, in which the discharge of the wet-vibrated discharge gas is performed, and a first circulation conduit 180 is branched from the discharge conduit 170 and connected to the heat exchanger 150 to supply heat to some of the wet-vibrated discharge gas and a second circulation conduit 190 where the heat-supplied discharge gas is supplied by connecting the heat exchanger 150 and the combustor 110.

The heat exchanger 150 is connected to the fluidized bed reduction furnace 140 to reduce the powdered ore from the partially combusted reduction gas and oxygen and allow the passage of the discharged high temperature discharge gas. The vibration damper 160 is connected to the heat exchanger 150 so that the high temperature discharge gas may be wet-vibrated to remove dust present in the discharge gas.

In the discharge conduit 170, the discharge gas that has been wet-vibrated may be discharged to the outside. On the other hand, the first circulation conduit 180 is branched from the discharge conduit 170, and is connected to the heat exchanger 150 so that some of the wet-vibrated discharge gas may receive heat from the heat exchanger 150. The second circulation conduit 190 connects the heat exchanger 150 and the combustor 110, and the discharge gas supplied with heat from the heat exchanger 150 is transferred to the combustor 110 and heated by partial combustion along with the reduction gas, and then may be supplied to the fluidized bed reduction furnace 140.

Reusing some of the discharge gas as a reduction gas is to increase a utilization rate of the gas, and the ratio of the reused discharge gas may be 70 to 80 volume% for the entire 100 volume% of the discharge gas. Accordingly, it is possible to prevent the reduction rate from being deteriorated due to an excessively high carbon dioxide content in the reduction gas.

The compacted material supply unit 200 is connected to the reduction unit 100 and the reaction unit 400 to manufacture the first reduction compacted material by using the reduced powdered ore supplied from the reduction unit 100 and supplies the first reduction compacted material to the reaction unit 400.

Specifically, the compacted material supply unit 200 may include a powdered ore storage bin 210 in which the reduced powdered ores are stored, a compressor 220 that produces a first reduction compacted material by hot pressing the reduced powdered ores supplied from the powdered ore storage bin 210, a disintegrator 230 for crushing the hot pressed first reduction compacted material, and a transfer line 240 for supplying the crushed first reduction compacted material to the reaction furnace 410.

The reduced powdered ore stored in the powdered ore storage bin 210 may be generated and stored by the reaction of the powdered ore and the reduction gas through the reduction unit 100.

The compressor 220 is connected to the powdered ore storage bin 210 and hot presses the reduced powdered ore supplied from the powdered ore storage bin 210 to produce the first reduction compacted material.

The disintegrator 230 may crush the first reduction compacted material and then supply the crushed first reduction compacted material to the transfer line 240. The transfer line 240 may connect the disintegrator 230 and the reaction furnace 410 to supply the crushed first reduction compacted material to the reaction furnace 410.

The gas supply unit 300 is connected to the coke manufacturing facility 10 and the reaction unit 400 to supply the byproduct gas generated from the coke manufacturing facility 10 to the reaction unit 400. The byproduct gas may be COG, and the byproduct gas may include hydrogen and hydrocarbons. The hydrocarbons may contain one or more of C₂H₂ and CH₄.

Specifically, the gas supply unit 300 may include a supply conduit 310 for supplying the byproduct gas generated from the coke manufacturing facility 10, a heater 320 connected to the supply conduit 310 to heat the byproduct gas, and a high temperature gas conduit 330 for connecting the heater 320 and the reaction furnace 410 to supply the heated byproduct gas.

The supply conduit 310 may supply the byproduct gas generated from the coke manufacturing facility 10 to the heater 320 by connecting the coke manufacturing facility 10 and the heater 320. The heater 320 may heat the supplied byproduct gas to be converted into a high temperature byproduct gas. The high temperature gas conduit 330 may supply the heated byproduct gas to the reaction furnace 410 by connecting the heater 320 and the reaction furnace 410 of the reaction unit 400.

Specifically, the gas supply unit 300 may further include a sulfureted hydrogen insufflator 340 that injects sulfureted hydrogen into the high temperature gas conduit 330 and a second oxygen blower 350 that injects oxygen into the high temperature gas conduit 330.

The sulfureted hydrogen insufflator 340 is connected to the high temperature gas conduit 330 to supply sulfureted hydrogen (H₂S) with the heated byproduct gas to the reaction furnace 410. By controlling a partial pressure ratio (P_{H2S}/P_{H2}) of the sulfureted hydrogen to hydrogen included in the byproduct gas, the conversion of iron (Fe) or oxidized steel (FeO) included in the first reduction compacted material into iron carbide (Fe₃C) may be stabilized.

The second oxygen blower 350 may be connected to the high temperature gas conduit 330 to supply oxygen O₂ together with the heated byproduct gas to the reaction furnace 410. By controlling the volume ratio of oxygen to the entire volume of byproduct gas, sulfureted hydrogen, and oxygen, the temperature of the reaction furnace 410 may be adjusted into a temperature that facilitates the reaction between the byproduct gas and the first reduction compacted material.

The reaction unit 400 reacts with the first reduction compacted material supplied from the compacted material supply unit 200 and the byproduct gas supplied from the gas supply unit 300 to produce the second reduction compacted material containing iron carbide and the reduction gas containing carbon monoxide.

Specifically, in the reaction furnace 410 constituting the reaction unit 400, the first reduction compacted material acts as a catalyst, and then the byproduct gas may be reformed into the reduction gas containing carbon monoxide and hydrogen. In addition, iron or oxidized steel included in the first reduction compacted material may react with hydrocarbons included in the byproduct gas, thereby a second reduction compacted material containing iron carbide may be generated.

The second reduction compacted material including iron carbide may be supplied to the charging unit through the first supply line 430, and the reduction gas reformed by the product gas may be supplied to the combustor 110 of the reduction unit 100 through the first reduction gas conduit 420.

Due to the use of first reduction compacted material, the byproduct gas can be economically reformed into the reduction gas, and the amount of coke conventionally consumed for the reduction and the melting may be reduced by using the second reduction compacted material including iron carbide for manufacturing molten iron.

Accordingly, a carbon dioxide discharge amount may be reduced compared to conventional processes.

Specifically, the transfer line 240 may be connected to the upper part of the reaction furnace 410 to supply the first reduction compacted material from the upper part of the reaction furnace 410, and the high temperature gas conduit 330 may be connected to the lower part of the reaction furnace 410 to supply the byproduct gas from the lower part of the reaction furnace 410.

Accordingly, an efficient reaction may be expected by allowing the first reduction compacted material and the byproduct gas to be crossed.

In the reduction melting furnace 500, the molten iron may be produced. The reduction melting furnace 500 may be configured as a blast furnace.

The coke charging unit 600 is connected to the coke manufacturing facility 10 and the reduction melting furnace 500 to charge the coke manufactured from the coke manufacturing facility 10 to the reduction melting furnace 500. Specifically, the coke charging unit 600 may include a coke storage bin 610 in which the coke manufactured from the coke manufacturing facility 10 is stored, and a raw material transfer line 620 for transferring the coke supplied from the coke storage bin 610 to the reduction melting furnace 500.

The coke storage bin 610 may store coke manufactured from the coke manufacturing facility 10 to supply coke to the raw material transfer line 620. The coke may be supplied to the reduction melting furnace 500 via raw material transfer line 620. Meanwhile, an iron source storage bin where an iron source is supplied is also connected to the raw material transfer line 620, so that the iron source may be supplied to the reduction melting furnace 500 through the raw material transfer line 620.

The compacted material charging unit 700 may be connected to the reaction unit 400 and the reduction melting furnace 500 to supply the second reduction compacted material manufactured in the reaction unit 400 to the reduction melting furnace 500. Specifically, the compacted material charging unit 700 may include a cooler 710 that cools the second reduction compacted material supplied from the reaction furnace 410, a second supply line 720 that supplies the cooled second reduction compacted material, a compacted material storage bin 730 where the cooled second reduction body is stored, an ejector 740 for ejecting the second reduction compacted material supplied from the compacted material storage bin 730, and a third supply line 750 that supplies the ejected second reduction compacted material to the raw material transfer line 620.

The cooler 710 may be connected to the first supply line 430 of the reaction unit 400 to cool the second reduction compacted material supplied from the first supply line 430. The second supply line 720 may be connected to the cooler 710 to supply the cooled second reduction compacted material, and the cooled second reduction compacted material may be stored in the compacted material storage bin 730 connected to the second supply line 720.

The ejector 740 ejects the second reduction compacted material from the compacted material storage bin 730, and the ejected second reduction compacted material may be supplied to the raw material transfer line 620 along the third supply line 750 to be supplied to the reduction melting furnace 500 together with the coke and iron source.

### Manufacturing method of a carbon dioxide discharge reduction type of molten iron

The manufacturing method of the carbon dioxide discharge reduction type of molten iron according to an embodiment of the present invention includes reducing a powdered ore by using a reduction gas, preparing a first reduction compacted material including at least one of iron and oxidized steel by using the reduced powdered ore, providing a byproduct gas generated from a coke manufacturing facility and reacting the first reduction compacted material and the byproduct gas to manufacture a second reduction compacted material including iron carbide and a reduction gas in which a byproduct gas is reformed, and the byproduct gas reduces the powdered ore by using the reformed reduction gas in the reduction of the powdered ore.

The manufacturing method of the carbon dioxide discharge reduction type of molten iron according to an embodiment of the present invention may further include, after manufacturing the second reduction compacted material and the reduction gas, charging the coke manufactured from the coke manufacturing facility to the reduction melting furnace and charging the second reduction compacted material to the reduction melting furnace.

First, in the reducing of the powdered ore, the powdered ore is reduced by using a reduction gas including carbon monoxide (CO). The powdered ore is reduced by using the reduction gas of which the byproduct gas is reformed by the reaction of the first reduction compacted material and the byproduct gas. Specifically, the reduction gas in which the byproduct gas is reformed may be partially combusted and then supplied to a fluidized bed reduction furnace where the reduction of the powdered ore is performed with oxygen.

At this time, a reduction rate of the powdered ore may be 65 to 75 %. Accordingly, adhesion between ores may be suppressed, and an operation efficiency deterioration in a fluidized bed reduction furnace composed of multiple stages may be prevented.

In addition, it is possible to reduce the amount of the coke consumed for the reduction and the melting by lowering the ore reduction burden and the melting burden in the reduction melting furnace.

Next, in the preparing of the first reduction compacted material, a first reduction compacted material including at least one of iron and oxidized steel is manufactured by using the reduced powdered ore. Specifically, the reduced powdered ore may be hot-pressed to form the first reduction compacted material, and then the hot-pressed first reduction compacted material may be crushed and reacted with the byproduct gas.

Next, in the preparing of the byproduct gas, the byproduct gas generated from the coke manufacturing facility is prepared. The byproduct gases may include hydrogen and hydrocarbons. The hydrocarbon may include one or more of C₂H₂ and CH₄.

Specifically, the preparing of the byproduct gas may include heating the byproduct gas generated from the coke manufacturing facility and including hydrogen and hydrocarbon, and blowing the heated byproduct gas together with sulfureted hydrogen and oxygen.

After heating the byproduct gas including hydrogen and hydrocarbon, the heated byproduct gas may be reacted with the first reduction compacted material with sulfureted hydrogen and oxygen. Oxygen reacts with the heated byproduct gas to form a reaction as shown in the Chemical Formula below and may be heated.

[Chemical Formula] 2H₂ +O₂ -> 2H₂O

At this time, oxygen may be controlled to 13 to 18 volume% with respect to entire 100 volume% of the injected byproduct gas, sulfureted hydrogen, and oxygen. When the oxygen content is less than 13 volume%, it may be difficult to control the reaction temperature between the first reduction compacted material and the byproduct gas at 700 to 750 °C in the manufacturing of the second reduction compacted material and the reduction gas.

On the other hand, if the oxygen content exceeds 18 volume%, the consumption of oxygen is too high and economy may be deteriorated.

Next, in the manufacturing of the second reduction compacted material and the reduction gas, the second reduction compacted material including iron carbide and the reduction gas of which the byproduct gas is reformed are manufactured by reacting the first reduction compacted material and the byproduct gas.

Specifically, iron or oxidized steel included in the first reduction compacted material may react with hydrocarbons included in the byproduct gas to produce the second reduction compacted material including iron carbide, and the first reduction compacted material acts as a catalyst, so that the byproduct gas including hydrocarbons and hydrogen may be reformed into the reduction gas including carbon monoxide and hydrogen.

A reaction including one or more of Reaction Equations 1 to 3 below may be formed.

[Reaction Equation 1] CH₄ + H₂O -> CO + 4H₂

[Reaction Equation 2] Fe + CH₄ -> Fe₃C + H₂

[Reaction Equation 3] FeO + CH₄ -> Fe₃C + H₂O

Since iron carbide (Fe₃C) included in the second reduction compacted material has a lower melting temperature than a metal iron, it may contribute to stabilization of a cohesive zone in the reduction melting furnace after being charged to the reduction melting furnace, thereby increasing the operating efficiency. However, since iron carbide is a material that is not thermodynamically stable, it is required to stabilize it. Accordingly, the partial pressure ratio (P_{H2S}/P_{H2}) of sulfureted hydrogen to hydrogen may be controlled from 0.0003 to 0.0005. This may stabilize the iron carbide included in the second reduction compacted material.

On the other hand, the reaction temperature may be controlled to 700 to 750 °C in order to facilitate the reaction between the first reduction compacted material and the byproduct gas. In addition, it is possible to maintain the reaction pressure between the first reduction compacted material and the byproduct gas below a normal pressure. This is because Reaction Equations 1 to 3 are all reactions in which the volume increases, and the lower the pressure, the higher the reaction rate.

The reduction gas produced by the reaction of the first reduction compacted material and the byproduct gas may be carbon monoxide and hydrogen at 85 volume% or more for the entire 100 % by volume.

### DETAILED DESCRIPTION OF THE EMBODIMENTS

Hereinafter, a specific embodiment of the present invention will be described. However, the following embodiment is only a specific embodiment of the present invention, and the present invention is not limited to the following embodiment.

### Embodiment

### (1) Manufacturing of a molten iron

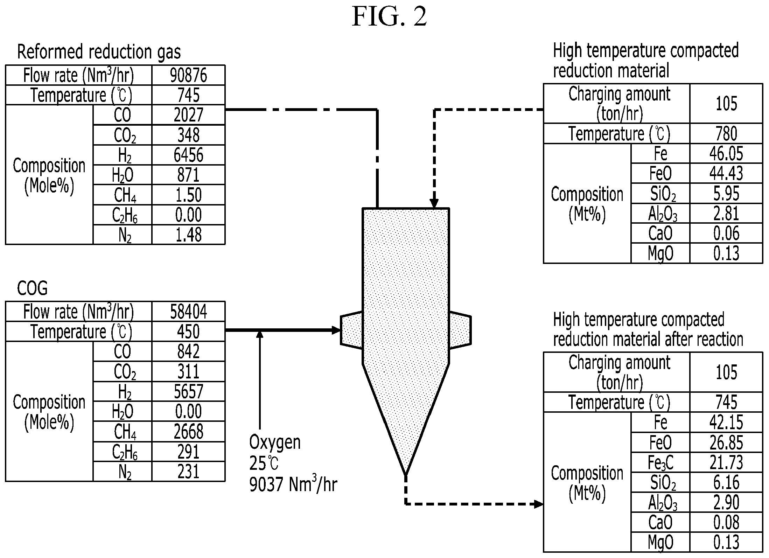

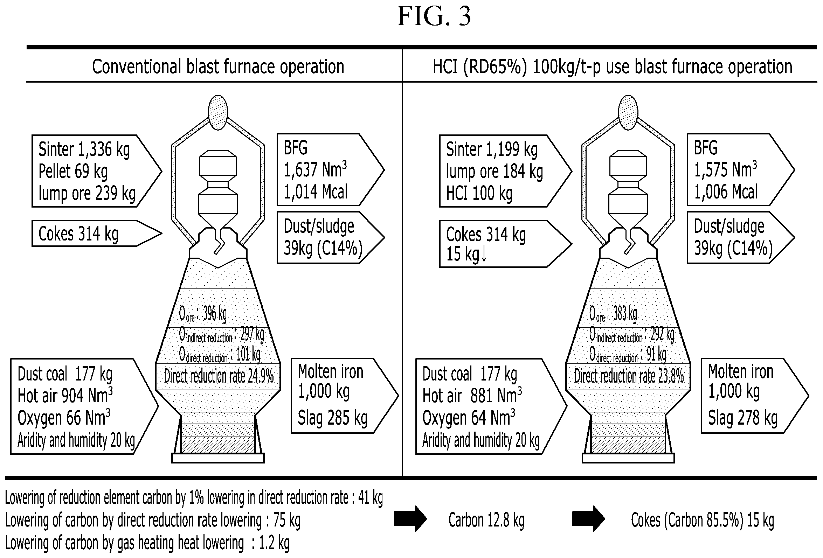

(As an embodiment) the molten iron is manufactured by using the carbon dioxide discharge reduction type of molten iron manufacturing device according to an embodiment of the present invention. The molten iron was prepared under the conditions of FIG. 2 and FIG. 3. As shown in FIG. 2, as the first reduction compacted material and the byproduct gas are reacted in the reaction furnace, most of the hydrocarbons in the form of C₂H₂ and CH₄ included in the byproduct gas were decomposed into CO and H₂ and reformed into reduction gas, and Fe and FeO included in the first reduction compacted material were converted to Fe₃C, resulting in the manufacture of the second reduction compacted material.

In the reaction furnace, the partial pressure ratio (P_{H2S}/P_{H2}) of sulfureted hydrogen to hydrogen was maintained at 0.00042, the reaction temperature was 720 °C, and the reaction pressure was kept below a normal pressure. The powdered ore was reduced by using the reduction gas generated in the reaction furnace. At this time, the reduction rate of the powdered ore was set to be 70 %. Per 1 Nm³ of the byproduct gas, 1.8 kg of the second reduction compacted material was prepared, and the molten iron was prepared by using the prepared second reduction compacted material and putting it into a reduction melting furnace with coke and an iron source.

(Comparative example) a sintered ore including iron and oxidized steel according to a conventional blast furnace operation was used to manufacture a molten iron under the condition of FIG. 3.

### (2) Reduction effect of a carbon dioxide discharge

As confirmed in FIG. 3, compared to the comparative example in which a molten iron was manufactured according to the conventional blast furnace operation, in the case of the embodiment, it may be confirmed that there is an effect of reducing 15 kg of coke per one ton of a molten iron produced in a reduction melting furnace.

Accordingly, it is possible to reduce the discharge amount of carbon dioxide compared to before.

The present invention may be embodied in many different forms, and should not be construed as being limited to the disclosed embodiments. In addition, it will be understood by those skilled in the art that various changes in form and details may be made thereto without departing from the scope of the invention, as defined in the appended claims. Therefore, it is to be understood that the above-described embodiments are for illustrative purposes only and the scope of the present invention is defined by the appended claims.

### [Description of symbols]

10: coke manufacturing facility
100: reduction unit 110: combustor
120: second reduction gas conduit 130: first oxygen blower
140: fluidized bed reduction furnace 150: heat exchanger
160: vibration damper 170: discharge conduit
180: first circulation conduit 190: second circulation conduit
200: compacted material supply unit 210: powdered ore storage bin
220: compressor 230: disintegrator
240: transfer line 300: gas supply unit
310: supply conduit 320: heater
330: high temperature gas conduit 340: sulfureted hydrogen insufflator
350: second oxygen blower 400: reaction unit
410: reaction furnace 420: first reduction gas conduit
430: first supply line 500: reduction melting furnace
600: coke charging unit 610: coke storage bin
620: raw material transfer line700: compacted material charging unit
710: cooler 720: second supply line
730: compacted material storage bin 740: ejector
750: third supply line
730: compacted material storage bin 740: ejector
750: third supply line

## Claims

1. A manufacturing device of molten iron, comprising:
a reduction unit (100) for reducing a powdered ore by using a reduction gas;
a compacted material supply unit (200) for manufacturing a first reduction compacted material including at least one of iron and oxidized steel by using the reduced powdered ore;
a gas supply unit (300) for supplying a byproduct gas generated from a coke manufacturing facility (10); and
a reaction unit (400),
wherein the reaction unit (100) includes a reaction furnace (410) in which a reaction of the first reduction compacted material and the byproduct gas is performed,
a first reduction gas conduit (420) for supplying the reduction gas produced from the reaction furnace (410) to the reduction unit (100); and
a first supply line (430) for supplying the second reduction compacted material produced from the reaction furnace (410),
wherein the gas supply unit (300) includes:
a supply conduit (310) for supplying a byproduct gas generated from the coke manufacturing facility (10);
a heater connected to the supply conduit (310) to heat the byproduct gas;
a high temperature gas conduit (330) for connecting the heater and the reaction furnace (410) to supply the heated byproduct gas;
a sulfureted hydrogen insufflator (340) for injecting a sulfureted hydrogen into the high temperature gas conduit (330); and
a second oxygen blower (350) for injecting oxygen into the high temperature gas conduit (330).

2. The manufacturing device of molten iron of claim 1, further comprising:
a reduction melting furnace (500);
a coke charging unit (600) for charging a coke produced from the coke manufacturing facility (10) to the reduction melting furnace (500); and
a compacted material charging unit (700) for charging the second reduction compacted material to the reduction melting furnace (500).

3. The manufacturing device of molten iron of claim 1, wherein
the reduction unit (100) includes:
a combustor (110) for partially combusting the reduction gas supplied from the reaction furnace (410);
a second reduction gas conduit (120) for supplying the partially combusted reduction gas; a first oxygen blower (130) for blowing oxygen into the combustor (110); and
a fluidized bed reduction furnace (140) in which the powdered ore is reduced by the partially combusted reduction gas and oxygen.

4. The manufacturing device of molten iron of claim 1, wherein
the compacted material supply unit (200) includes:
a powdered ore storage bin (210) in which the reduced powdered ore is stored;
a compressor (220) for producing the first reduction compacted material by hot pressing the reduced powdered ore supplied from the powdered ore storage bin (210);
a disintegrator (230) for crushing the hot pressed first reduction compacted material; and
a transfer line f (240) or supplying the crushed first reduction compacted material to the reaction furnace (410).

5. The manufacturing device of molten iron of claim 3, wherein
the reduction unit (100) includes:
a heat exchanger (150) through which high temperature discharge gas generated from the fluidized bed reduction furnace (140) passes;
a vibration damper (160) for wet-vibrating the discharge gas that has passed through the heat exchanger (150);
a discharge conduit (170) for discharging the wet-vibrated discharge gas;
a first circulation conduit (180) branched from the discharge conduit (170) and connected to the heat exchanger (150) to supply heat to some of the wet-vibrated discharge gas; and
a second circulation conduit (190) for connecting the heat exchanger (150) and the combustor (110) to supply the heated discharge gas.

6. The manufacturing device of molten iron of claim 1, wherein
the coke charging unit (600) includes:
a coke storage bin (510) in which a coke manufactured from the coke manufacturing facility (10) is stored; and
a raw material transfer line (620) for transferring the coke supplied from the coke storage bin (510) to the reduction melting furnace (500).

7. The manufacturing device of molten iron of claim 6, wherein
the compacted material charging unit (700) includes:
a cooler (710) for cooling the second reduction compacted material supplied from the reaction furnace (410);
a second supply line (720) where the supply of the cooled second reduction compacted material is performed;
a compacted material storage bin (730) in which the cooled second reduction compacted material is stored;
an ejector (740) for ejecting the second reduction compacted material supplied from the compacted material storage bin (730); and
a third supply line (750) for supplying the elected second reduction compacted material to the raw material transfer line (620).

8. The manufacturing device of molten iron of claim 1, wherein the first reduction compacted material is supplied from the upper part of the reaction furnace (410) and the byproduct gas is supplied from the lower part of the reaction furnace (410).

9. A manufacturing method of molten iron, comprising:
reducing a powdered ore by using a reduction gas;
preparing a first reduction compacted material including at least one of iron and oxidized steel by using the reduced powdered ore;
providing a byproduct gas generated from a coke manufacturing facility (10); and
reacting the first reduction compacted material and the byproduct gas to produce a second reduction compacted material including an iron carbide and a reduction gas reformed with the byproduct gas, and
in the reducing of the powdered ore,
the powdered ore is reduced by using the reduction gas reformed with the byproduct gas,
wherein the preparing the byproduct gas includes:
heating the byproduct gas generated from the coke manufacturing facility (10) and
including hydrogen and hydrocarbon; and
blowing the heated byproduct gas together with sulfureted hydrogen and oxygen,
Wherein in the blowing of the byproduct gas together with the sulfureted hydrogen and oxygen,
oxygen is 13 to 18 volume% of the entire 100 volume% of the blown byproduct gas,
sulfureted hydrogen, and oxygen.

10. The manufacturing method of molten iron of claim 9, further comprising:
after producing the second reduction compacted material and the reduction gas,
charging a coke produced from the coke manufacturing facility (10) to a reduction melting furnace (500); and
charging the second reduction compacted material to the reduction melting furnace (500).

11. The manufacturing method of molten iron of claim 9, wherein
in the producing of the second reduction compacted material and the reduction gas,
a reaction temperature of the byproduct gas and the first reduction compacted material is 700 to 750 °C, and
a partial pressure ratio (PH2S/PH2) of the sulfureted hydrogen to the hydrogen is 0.0003 to 0.0005.

12. The manufacturing method of molten iron of claim 9, wherein
in the producing of the second reduction compacted material and the reduction gas,
the reaction of the byproduct gas and the first reduction compacted material includes at least one among Reaction Equations 1 to 3 below:
[Reaction Equation 1] CH4 + H2O -> CO + 4H2
[Reaction Equation 2] Fe + CH4 -> Fe3C + H2
[Reaction Equation 3] FeO + CH4 -> Fe3C + H2O.

## Patentansprüche

1. Vorrichtung zur Herstellung von Eisenschmelze, umfassend:
eine Reduktionseinheit (100) zum Reduzieren eines Erzpulvers unter Verwendung eines Reduktionsgases;
eine Zufuhreinheit (200) für verdichtetes Material zum Herstellen eines ersten reduktionsverdichteten Materials, das mindestens eines von Eisen und oxidiertem Stahl beinhaltet, unter Verwendung des reduzierten Erzpulvers;
eine Gaszufuhreinheit (300) zum Zuführen eines von einer Koksherstellungsanlage (10) erzeugten Nebenproduktgases, und
eine Reaktionseinheit (400),
wobei die Reaktionseinheit (100) einen Reaktionsofen (410) beinhaltet, in dem eine Reaktion des ersten reduktionsverdichteten Materials und des Nebenproduktgases durchgeführt wird,
eine erste Reduktionsgasleitung (420) zum Zuführen des aus dem Reaktionsofen (410) erzeugten Reduktionsgases zu der Reduktionseinheit (100); und
eine erste Zufuhrleitung (430) zum Zuführen des aus dem Reaktionsofen (410) erzeugten zweiten reduktionsverdichteten Materials,
wobei die Gaszufuhreinheit (300) Folgendes beinhaltet:
eine Zufuhrleitung (310) zum Zuführen eines von der Koksherstellungsanlage (10) erzeugten Nebenproduktgases,
eine Heizvorrichtung, die mit der Zufuhrleitung (310) verbunden ist, um das Nebenproduktgas zu erwärmen;
eine Hochtemperaturgasleitung (330) zum Verbinden der Heizvorrichtung und des Reaktionsofens (410), um das erwärmte Nebenproduktgas zuzuführen;
eine Einblasvorrichtung (340) für Schwefelwasserstoff zum Einbringen eines Schwefelwasserstoffs in die Hochtemperaturgasleitung (330); und
ein zweites Sauerstoffgebläse (350) zum Einbringen von Sauerstoff in die Hochtemperaturgasleitung (330).

2. Vorrichtung zur Herstellung von Eisenschmelze nach Anspruch 1, ferner umfassend:
einen Schmelz-Reduktionsofen (500);
eine Koksbeschickungseinheit (600) zum Beschicken des Schmelz-Reduktionsofens (500) mit aus der Koksherstellungsanlage (10) erzeugtem Koks; und
eine Beschickungseinheit (700) für verdichtetes Material zum Beschicken des Schmelz-Reduktionsofens (500) mit dem zweiten reduktionsverdichteten Material.

3. Vorrichtung zur Herstellung von Eisenschmelze nach Anspruch 1, wobei
die Reduktionseinheit (100) Folgendes beinhaltet:
eine Brennkammer (110) zum teilweisen Verbrennen des aus dem Reaktionsofen (410) zugeführten Reduktionsgases;
eine zweite Reduktionsgasleitung (120) zum Zuführen des teilweise verbrannten Reduktionsgases;
ein erstes Sauerstoffgebläse (130) zum Einblasen von Sauerstoff in die Brennkammer (110); und
einen Wirbelschicht-Reduktionsofen (140), in dem das Erzpulver durch das teilweise verbrannte Reduktionsgas und den Sauerstoff reduziert wird.

4. Vorrichtung zur Herstellung von Eisenschmelze nach Anspruch 1, wobei die Zufuhreinheit (200) für verdichtetes Material Folgendes beinhaltet:
einen Lagerbehälter (210) für Erzpulver, in dem das reduzierte Erzpulver gelagert wird;
einen Verdichter (220) zum Erzeugen des ersten reduktionsverdichteten Materials durch Heißpressen des aus dem Lagerbehälter (210) für Erzpulver zugeführten reduzierten Erzpulvers;
einen Zerkleinerer (230) zum Zerkleinern des heißgepressten ersten reduktionsverdichteten Materials; und
eine Transportleitung (240) zum Zuführen des zerkleinerten ersten reduktionsverdichteten Materials zu dem Reaktionsofen (410).

5. Vorrichtung zur Herstellung von Eisenschmelze nach Anspruch 3, wobei
die Reduktionseinheit (100) Folgendes beinhaltet:
einen Wärmetauscher (150), durch den aus dem Wirbelschicht-Reduktionsofen (140) erzeugtes Hochtemperaturabgas strömt;
einen Vibrationsdämpfer (160) zum Nassvibrieren des Abgases, das durch den Wärmetauscher (150) geströmt ist,
eine Abführleitung (170) zum Abführen des nassvibrierten Abgases,
eine erste Umwälzleitung (180), die von der Abführleitung (170) abgezweigt und mit dem Wärmetauscher (150) verbunden ist, um einem Teil des nassvibrierten Abgases Wärme zuzuführen; und
eine zweite Umwälzleitung (190) zum Verbinden des Wärmetauschers (150) und der Brennkammer (110), um das erwärmte Abgas zuzuführen.

6. Vorrichtung zur Herstellung von Eisenschmelze nach Anspruch 1, wobei
die Koksbeschickungseinheit (600) Folgendes beinhaltet:
einen Kokslagerbehälter (510), in dem ein von der Koksherstellungsanlage (10) hergestellter Koks gelagert wird; und
eine Rohstofftransportleitung (620) zum Transportieren des von dem Kokslagerbehälter (510) zugeführten Kokses zu dem Schmelz-Reduktionsofen (500).

7. Vorrichtung zur Herstellung von Eisenschmelze nach Anspruch 6, wobei
die Beschickungseinheit (700) für verdichtetes Material Folgendes beinhaltet:
einen Kühler (710) zum Kühlen des aus dem Reaktionsofen (410) zugeführten zweiten reduktionsverdichteten Materials;
eine zweite Zufuhrleitung (720), in der die Zufuhr des gekühlten zweiten reduktionsverdichteten Materials durchgeführt wird;
einen Lagerbehälter (730) für verdichtetes Material, in dem das gekühlte zweite reduktionsverdichtete Material gelagert wird;
einen Ejektor (740) zum Ausstoßen des aus dem Lagerbehälter (730) für verdichtetes Material zugeführten zweiten reduktionsverdichteten Materials; und
eine dritte Zufuhrleitung (750) zum Zuführen des ausgewählten zweiten reduktionsverdichteten Materials zu der Rohstofftransportleitung (620).

8. Vorrichtung zur Herstellung von Eisenschmelze nach Anspruch 1, wobei
das erste reduktionsverdichtete Material aus dem oberen Teil des Reaktionsofens (410) zugeführt wird und das Nebenproduktgas aus dem unteren Teil des Reaktionsofens (410) zugeführt wird.

9. Verfahren zur Herstellung von Eisenschmelze, umfassend:
Reduzieren eines Erzpulvers unter Verwendung eines Reduktionsgases;
Herstellen eines ersten reduktionsverdichteten Materials, das mindestens eines von Eisen und oxidiertem Stahl beinhaltet, unter Verwendung des reduzierten Erzpulvers;
Bereitstellen eines aus einer Koksherstellungsanlage (10) erzeugten Nebenproduktgases, und
Umsetzen des ersten reduktionsverdichteten Materials und des Nebenproduktgases, um ein zweites reduktionsverdichtetes Material zu erzeugen, das ein Eisencarbid und ein mit dem Nebenproduktgas reformiertes Reduktionsgas beinhaltet, und
wobei bei dem Reduzieren des Erzpulvers
das Erzpulver unter Verwendung des mit dem Nebenproduktgas reformierten Reduktionsgases reduziert wird,
wobei das Herstellen des Nebenproduktgases Folgendes beinhaltet:
Erwärmen des von der Koksherstellungsanlage (10) erzeugten Nebenproduktgases, das Wasserstoff und Kohlenwasserstoff beinhaltet, und
Einblasen des erwärmten Nebenproduktgases zusammen mit Schwefelwasserstoff und Sauerstoff,
wobei bei dem Einblasen des Nebenproduktgases zusammen mit dem Schwefelwasserstoff und Sauerstoff
der Sauerstoff 13 bis 18 Volumen-% der gesamten 100 Volumen-% des eingeblasenen Nebenproduktgases, Schwefelwasserstoffs und Sauerstoffs ausmacht.

10. Verfahren zur Herstellung von Eisenschmelze nach Anspruch 9, ferner umfassend:
nach dem Erzeugen des zweiten reduktionsverdichteten Materials und des Reduktionsgases
Beschicken eines Schmelz-Reduktionsofens (500) mit aus der Koksherstellungsanlage (10) erzeugtem Koks; und
Beschicken des Schmelz-Reduktionsofens (500) mit dem zweiten reduktionsverdichteten Material.

11. Verfahren zur Herstellung von Eisenschmelze nach Anspruch 9, wobei
bei dem Erzeugen des zweiten reduktionsverdichteten Materials und des Reduktionsgases
eine Reaktionstemperatur des Nebenproduktgases und des ersten reduktionsverdichteten Materials 700 bis 750 °C beträgt und
ein Partialdruckverhältnis (PH2S/PH2) des Schwefelwasserstoffs zu dem Wasserstoff 0,0003 bis 0,0005 beträgt.

12. Verfahren zur Herstellung von Eisenschmelze nach Anspruch 9, wobei
bei dem Erzeugen des zweiten reduktionsverdichteten Materials und des Reduktionsgases
die Reaktion des Nebenproduktgases und des ersten reduktionsverdichteten Materials mindestens eine der folgenden Reaktionsgleichungen 1 bis 3 beinhaltet:
[Reaktionsgleichung 1] CH4 + H2O -> CO + 4H2
[Reaktionsgleichung 2] Fe + CH4 -> Fe3C + H2
[Reaktionsgleichung 3] FeO + CH4 -> Fe3C + H2O.

## Revendications

1. Dispositif de fabrication de fonte liquide, comprenant :
une unité de réduction (100) pour réduire un minerai en poudre en utilisant un gaz de réduction ;
une unité d'alimentation en matériau compacté (200) pour fabriquer un premier matériau compacté de réduction incluant au moins l'un parmi du fer et de l'acier oxydé en utilisant le minerai en poudre réduit ;
une unité d'alimentation en gaz (300) pour fournir un sous-produit gazeux généré par une installation de fabrication de coke (10) ; et
une unité de réaction (400),
dans lequel l'unité de réaction (100) inclut un four de réaction (410) dans lequel une réaction du premier matériau compacté de réduction et du sous-produit gazeux est effectuée,
un premier conduit de gaz de réduction (420) pour fournir le gaz de réduction produit par le four de réaction (410) à l'unité de réduction (100) ; et
une première conduite d'alimentation (430) pour fournir le second matériau compacté de réduction produit par le four de réaction (410),
dans lequel l'unité d'alimentation en gaz (300) inclut :
un conduit d'alimentation (310) pour fournir un sous-produit gazeux généré par l'installation de fabrication de coke (10) ;
un réchauffeur raccordé au conduit d'alimentation (310) pour chauffer le sous-produit gazeux ;
un conduit de gaz à haute température (330) pour raccorder le réchauffeur et le four de réaction (410) afin de fournir le sous-produit gazeux chauffé ;
un insufflateur d'hydrogène sulfuré (340) pour injecter un hydrogène sulfuré dans le conduit de gaz à haute température (330) ; et
une seconde soufflerie d'oxygène (350) pour injecter de l'oxygène dans le conduit de gaz à haute température (330).

2. Dispositif de fabrication de fonte liquide selon la revendication 1, comprenant en outre :
un four de fusion de réduction (500) ;
une unité de chargement de coke (600) pour charger un coke produit par l'installation de fabrication de coke (10) dans le four de fusion de réduction (500) ; et
une unité de chargement de matériau compacté (700) pour charger le second matériau compacté de réduction dans le four de fusion de réduction (500).

3. Dispositif de fabrication de fonte liquide selon la revendication 1, dans lequel
l'unité de réduction (100) inclut :
une chambre de combustion (110) pour la combustion partielle du gaz de réduction fourni par le four de réaction (410) ;
un second conduit de gaz de réduction (120) pour fournir le gaz de réduction partiellement brûlé ;
une première soufflerie d'oxygène (130) pour souffler de l'oxygène dans la chambre de combustion (110) ; et
un four de réduction à lit fluidisé (140) dans lequel le minerai en poudre est réduit par le gaz de réduction partiellement brûlé et l'oxygène.

4. Dispositif de fabrication de fonte liquide selon la revendication 1, dans lequel
l'unité d'alimentation en matériau compacté (200) inclut :
un bac de stockage de minerai en poudre (210) dans lequel le minerai en poudre réduit est stocké ;
un compresseur (220) pour produire le premier matériau compacté de réduction en pressant à chaud le minerai réduit en poudre fourni par le bac de stockage de minerai en poudre (210) ;
un désintégrateur (230) pour broyer le premier matériau compacté de réduction pressé à chaud ; et
une conduite de transfert f (240) pour fournir le premier matériau compacté de réduction broyé au four de réaction (410).

5. Dispositif de fabrication de fonte liquide selon la revendication 3, dans lequel
l'unité de réduction (100) inclut :
un échangeur de chaleur (150) à travers lequel passe un gaz de décharge à haute température généré par le four de réduction à lit fluidisé (140) ;
un amortisseur de vibrations (160) pour faire vibrer par voie humide le gaz de décharge qui a traversé l'échangeur de chaleur (150) ;
un conduit de décharge (170) pour décharger le gaz de décharge vibré par voie humide ;
un premier conduit de circulation (180) ramifié à partir du conduit de décharge (170) et raccordé à l'échangeur de chaleur (150) pour fournir de la chaleur à une partie du gaz de décharge vibré par voie humide ; et
un second conduit de circulation (190) pour raccorder l'échangeur de chaleur (150) et la chambre de combustion (110) afin de fournir le gaz de décharge chauffé.

6. Dispositif de fabrication de fonte liquide selon la revendication 1, dans lequel
l'unité de chargement de coke (600) inclut :
un bac de stockage de coke (510) dans lequel est stocké un coke fabriqué par l'installation de fabrication de coke (10) ; et
une conduite de transfert de matières premières (620) pour transférer le coke fourni par le bac de stockage de coke (510) au four de fusion de réduction (500).

7. Dispositif de fabrication de fonte liquide selon la revendication 6, dans lequel
l'unité de chargement de matériau compacté (700) inclut :
un refroidisseur (710) pour refroidir le second matériau compacté de réduction fourni par le four de réaction (410) ;
une deuxième conduite d'alimentation (720) où l'alimentation en second matériau compacté de réduction refroidi est effectuée ;
un bac de stockage de matériau compacté (730) dans lequel le second matériau compacté de réduction refroidi est stocké ;
un éjecteur (740) pour éjecter le second matériau compacté de réduction fourni par le bac de stockage de matériau compacté (730) ; et
une troisième conduite d'alimentation (750) pour fournir le second matériau compacté de réduction élu à la conduite de transfert de matières premières (620).

8. Dispositif de fabrication de fonte liquide selon la revendication 1, dans lequel
le premier matériau compacté de réduction est fourni à partir de la partie supérieure du four de réaction (410) et le sous-produit gazeux est fourni à partir de la partie inférieure du four de réaction (410).

9. Procédé de fabrication de fonte liquide, comprenant :
la réduction d'un minerai en poudre en utilisant un gaz de réduction ;
la préparation d'un premier matériau compacté de réduction incluant au moins l'un parmi du fer et de l'acier oxydé en utilisant le minerai en poudre réduit ;
la fourniture d'un sous-produit gazeux généré par une installation de fabrication de coke (10) ; et
la réaction du premier matériau compacté de réduction et du sous-produit gazeux pour produire un second matériau compacté de réduction incluant un carbure de fer et un gaz de réduction reformé avec le sous-produit gazeux, et
dans la réduction du minerai en poudre,
le minerai en poudre est réduit en utilisant le gaz de réduction reformé avec le sous-produit gazeux,
dans lequel la préparation du sous-produit gazeux inclut :
le chauffage du sous-produit gazeux généré par l'installation de fabrication de coke (10) et incluant de l'hydrogène et des hydrocarbures ; et
le soufflage du sous-produit gazeux chauffé conjointement avec l'hydrogène sulfuré et l'oxygène,
dans lequel, lors du soufflage du sous-produit gazeux conjointement avec l'hydrogène sulfuré et l'oxygène,
l'oxygène représente 13 à 18 % en volume de la totalité des 100 % en volume des sous-produit gazeux, hydrogène sulfuré et oxygène soufflés.

10. Procédé de fabrication de fonte liquide selon la revendication 9, comprenant en outre :
après avoir produit le second matériau compacté de réduction et le gaz de réduction,
le chargement d'un coke produit par l'installation de fabrication de coke (10) dans un four de fusion de réduction (500) ; et
le chargement du second matériau compacté de réduction dans le four de fusion de réduction (500).

11. Procédé de fabrication de fonte liquide selon la revendication 9, dans lequel
lors de la production du second matériau compacté de réduction et du gaz de réduction, une température de réaction du sous-produit gazeux et du premier matériau compacté de réduction est de 700 à 750 °C, et
un rapport de pression partielle (PH2S/PH2) entre l'hydrogène sulfuré et l'hydrogène est de 0,0003 à 0,0005.

12. Procédé de fabrication de fonte liquide selon la revendication 9, dans lequel
lors de la production du second matériau compacté de réduction et du gaz de réduction,
la réaction du sous-produit gazeux et du premier matériau compacté de réduction inclut au moins l'une des équations de réaction 1 à 3 ci-dessous :
[Équation de réaction 1] CH4 + H2O -> CO + 4H2
[Équation de réaction 2] Fe + CH4 -> Fe3C + H2
[Équation de réaction 3] FeO + CH4 -> Fe3C + H2O.
